# EUROPEAN PATENT APPLICATION

(11) **EP 1 345 392 A1**
(43) Date of publication of application: **17.09.2003**
(21) Application number: 03005234.4
(22) Date of filing: 10.03.2003
(51) Int. Cl.: H04M 1/22, H04M 1/02, H05K 5/03

(54) **Interchangeable cover with integrated display for a communication device**

(30) Priority: 11.03.2002 GB 0205642
(71) Applicant: Sendo International Ltd., Hong Kong (CN)
(72) Inventor: Parker, Terry, Russell, Nuneaton, Warwickshire CV10 9JT (GB)
(74) Representative: Wray, Antony John

(57) **Abstract**

A communication device (500) includes at least one interchangeable cover part (316) and a display (320), such that the display (320) is integrated into the interchangeable cover part (316).

This provides the advantage that a single functional module can be manufactured without a display. A number of interchangeable covers or cover parts can be used with the communication device offering a variety of displays. Furthermore, the functional module, of say a mobile phone, can be designed, manufactured and configured independently of the display, since a generic connection is provided. Also, a single functional module can be manufactured for a variety of different tier phones having different size/types of display, with potentially only software variations required.

## Description

### Field of the Invention

This invention relates to an interchangeable cover for a communication device, such as a mobile phone. The invention is applicable to, but not limited to, an interchangeable cover for a mobile phone capable of displaying text strings, text messages, images and/or video.

### Background of the Invention

Future generation mobile and fixed communication systems are expected to provide the capability for video and image transmission as well as the more conventional voice and data services. As such, video and image services for communication devices will become more prevalent, and improvements in video/image compression technology are likely to be needed in order to match the consumer demand within the available communication bandwidth.
Furthermore, as mobile users wish to access ever more services such as text strings, text messages, email, images and/or video, whilst on the move, similar improvements are required for display technologies.
Given the current user trend towards desiring smaller, lighter and more portable wireless communication devices, the improvement to displays is considered a particularly key market differentiator for manufacturers.

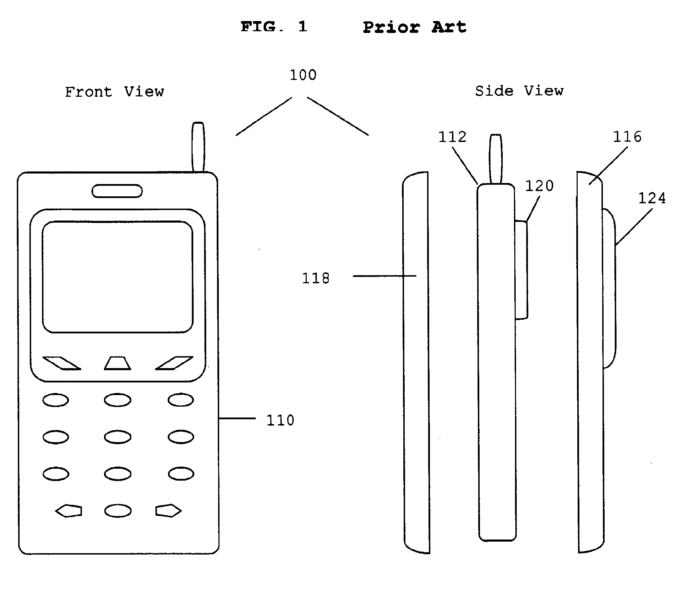

FIG. 1 illustrates a known front view and a side view construction of a mobile phone 110. The mobile phone 110 has a functional module 112 and a front cover 116, which is a detachable 'cosmetic' cover, as known in the art. For the illustrated embodiment it can be seen in the side view of FIG. 1 that the mobile phone also has a detachable rear cover 118.

When the mobile phone 110 is assembled, the front and rear covers 116, 118 substantially enclose the functional module 112 of the mobile phone 110. Preferably, the front and rear covers 116, 118 have means to co-operate with one another in order to detachably retain the two covers 116, 118 in position, relative to one another, when the mobile phone 110 is assembled.

The functional module 112 of the mobile phone 110 may also be capable of being detachably retained in position relative to the front cover 116 and/or the rear cover 118 when the mobile phone 110 is assembled.

In the field of this invention, it is known that communication devices such as mobile phones include displays, typically in the form of liquid crystal displays (LCDs). The LCDs are generally attached to a main printed circuit board (PCB) on the functional module 112 of the mobile phone, or an ancillary PCB of the mobile phone. The functional module 112 also includes circuitry for controlling the functionality of the mobile phone 110, the LCD panel 120 and other means necessary for the mobile phone 110 to function. It is also known for an illumination mechanism, such as light emitting diodes (LEDs), to be embedded within the device and mounted on a printed circuit board (PCB) of the device. The PCB may be the main PCB of the device or an ancillary PCB that may, or may not, be dedicated to the illumination mechanism.

The front cover 116 also includes a protection element 124, as known in the art, which can be in the form of a transparent material that extends over the LCD panel 120 when the mobile phone 110 is assembled. In this manner, the LCD panel 120 is protected from being damaged, whilst allowing a user to view the LCD panel 120.

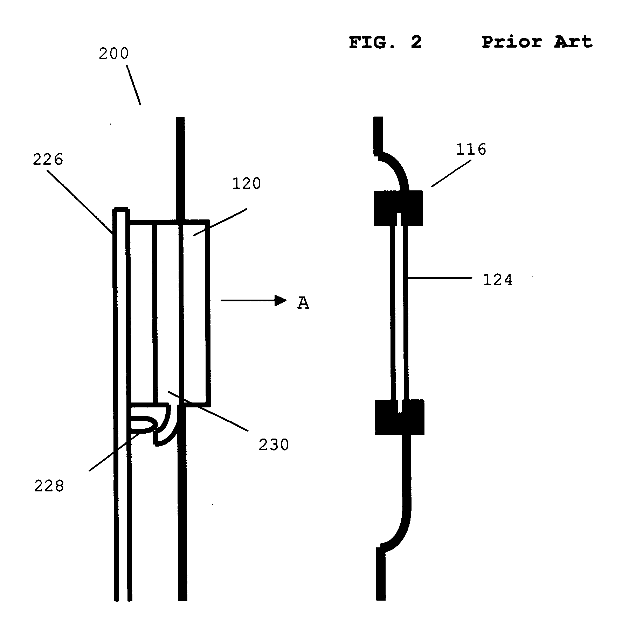

FIG. 2 illustrates a known method of illuminating an LCD panel 120 that is mounted on a PCB 226. One or more light emitting diodes (LEDs) 228, also mounted on the PCB 226, are used to provide light when the LCD panel 120 requires illumination. A light guide 230 redirects light from the LEDs 228, under the LCD panel 120 such that light passes through the LCD 228 in the direction 'A'. In this manner, a user can more easily discern the image being displayed by the LCD panel 120.

The inventor of the present invention has recognised a problem with the above arrangement, in that, once the mobile phone has been manufactured, it is not easy (if at all possible) for the size or type of display to be altered.

Furthermore, since the LCD is located on the PCB it takes up valuable 'real estate' on the PCB, and requires the design of the PCB to be tailored in accordance with the LCD. Thus, the size of the PCB is extended in order to support the LCD. In addition, if the type or size of the LCD is changed, for example during a manufacturing or PCB design stage, it is likely that the design of the PCB will also require alteration.

It is also known for communication devices such as mobile phones to include a functional module, in which electromechanical components are provided. Such electromechanical components may be provided with one or more interchangeable cover parts, as shown, located in use about the functional module to provide an aesthetic appearance to the mobile phone. A typical arrangement would be where the front and rear cover parts are removable, such that they can be replaced with alternative cover parts, for example to change the colour and appearance of the mobile phone. However, such known interchangeable cover parts are only capable of altering the appearance of the mobile phone, and do not alter any functional attributes of the mobile phone.

Thus, a need exists for an improved wireless communication device interchangeable cover and improved display arrangement, wherein the abovementioned disadvantages may be alleviated.

### Statement of Invention

In accordance with a first aspect of the present invention, there is provided a communication device, as claimed in Claim 1.

In accordance with a second aspect of the present invention, there is provided interchangeable cover part for a communication device, as claimed in Claim 13.

In accordance with a third aspect of the present invention, there is provided a functional module, as claimed in Claim 18.

In accordance with a fourth aspect of the present invention, there is provided a set of covers, as claimed in Claim 19.

In accordance with a fifth aspect of the present invention, there is provided a functional module, as claimed in Claim 21.

Further aspects of the present invention are as defined in the dependent Claims.

In summary, a communication device is described whereby the display and interchangeable cover part are integrated.

The expression 'cover part' encompasses or extends to 'cover', 'casing', 'enclosure' etc.

### Brief Description of the Drawings

FIG. 1 illustrates a known front view and side view construction of a mobile phone.
FIG. 2 illustrates a known arrangement for illuminating an LCD panel of a communication device.
   Exemplary embodiments of the present invention will now be described, by way of example only, with reference to the accompanying drawings, in which:
FIG. 3 illustrates a display arrangement according to a preferred embodiment of the present invention.
FIG. 4 illustrates a display, such as an LCD panel, of reduced dimensions in accordance with an alternative embodiment of the present invention.
FIG. 5 illustrates a communication device adapted in accordance with the preferred embodiment of the present invention.
FIG. 6 illustrates a more detailed block diagram of the display driver of FIG. 5.
FIG. 7 illustrates a preferred example of an LCD controller, such as the LCD controller of FIG. 6.

### Description of Preferred Embodiments

The preferred embodiment of the present invention will be described in terms of a mobile telephone. However, it will be appreciated that the invention may be embodied in any other type of communication device that includes a display, for example a pager, a portable or mobile radio, a personal digital assistant, a laptop computer, etc. It is also envisaged that the present invention is not limited to wireless communication devices, as fixed communication devices such as business/home telephone devices that connect to the public services telephone network (PSTN) also often include a display that could benefit from the inventive concepts described herein.

The present invention provides a mechanism to allow a display of a communication device, such as a mobile phone, to be changed at any point during the lifetime of the device. A further advantage is that once the communication device is in the hands of the sales person or the end-user, the sales person or end-user can readily change the display to suit the end-user's particular requirements/preferences by buying a front cover that has the appropriate display. In this regard, the end-user may be provided with a set of front covers, having different displays, to choose to accompany his/her communication device.

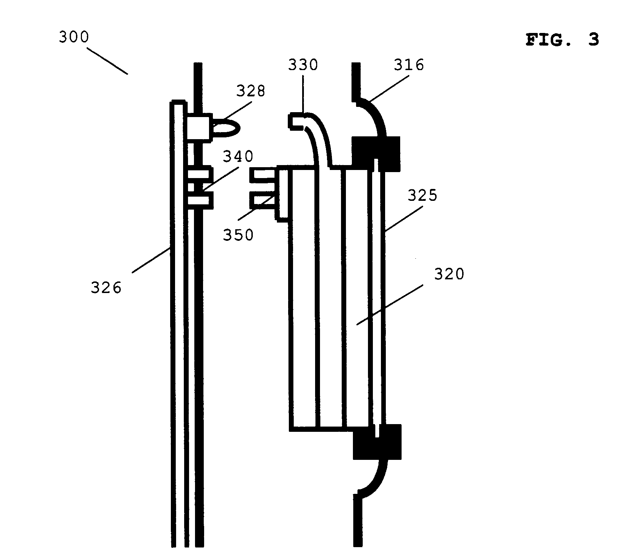

Referring now to FIG. 3, an example of a display arrangement according to the present invention, is illustrated. In this arrangement, an LCD panel 320 is mounted on the front cover part 316. Preferably, a light guide 330 is also provided on the front cover part 316, which for the illustrated embodiment is provided substantially behind the LCD panel 320. The light guide 330 may be any form of light guide known in the art, such as a diffuser or light pipe with a coupling aperture, a prism or a combination thereof. A PCB 326, provided within the functional module 300 of the mobile phone, provides one or more illumination elements, which for the illustrated embodiment is in the form of one or more LEDs 328.

However, it is within the contemplation of the invention that the one or more illumination elements may be located on the front cover part 316, such that control and/or power signals are transmitted to the front cover part 316 from the main PCB, via a communication link.

When the mobile phone is assembled, with the front cover part 316 and the functional module 300 located adjacent one another, the LEDs 328 are located proximal to at least a part of the light guide 330. The assembly is such that the light guide 330 guides at least a part of the light emitted by the LEDs 328 and directed behind the LCD panel 320. In this manner, light illuminates the LCD panel 320 from behind, to improve a user's view of the LCD panel.

Preferably, the front cover part 316 further includes protection element 325, which substantially covers the LCD panel 320. The protection element 325 is preferably transparent such that a user is able to view the LCD panel 320 through the protection element 325.

Also provided on the PCB 326 is a first connection part 340, which, in use, engages with a second connection part 350 provided by the front cover part 316. The engagement between the first and second connection parts 340, 350 provides a control signal link from the PCB 326 to the LCD panel 320, and preferably also provides power to the LCD panel 320.

The first and second connection parts 340, 350 are preferably of a standard configuration such that a number of front interchangeable cover parts 416 may provide a variety of LCD panel configurations.

For the control signal link, the first and second connection parts may be in the form of electrical contacts, infra red transmit and receive pairs, short-range wireless radio transceivers, or any other suitable means of transmitting and receiving control signals. It is also envisaged that the control signal link may be implemented using an electromechanical coupling mechanism, to effect both the mechanical coupling of the cover part to the functional module as well as facilitate the control signal communication.

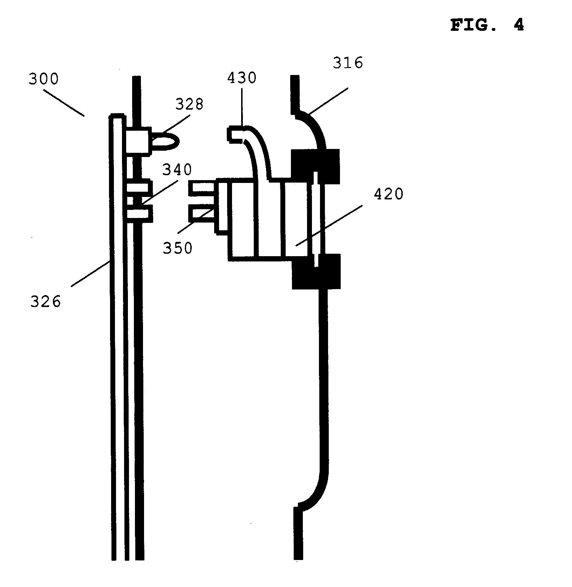

In this way, the type/size of the LCD panel can be changed and/or upgraded simply by changing the front cover part 316. For example, as illustrated in FIG. 4, an LCD panel 420 of reduced dimensions is provided. In alternative embodiments, the display may include alternative display technologies, different types of display, for example to display different media such as text only or video only, etc. Furthermore, in a preferred embodiment of the present invention, the front cover part includes a corresponding light guide 430, to route light to an area behind the LCD panel.

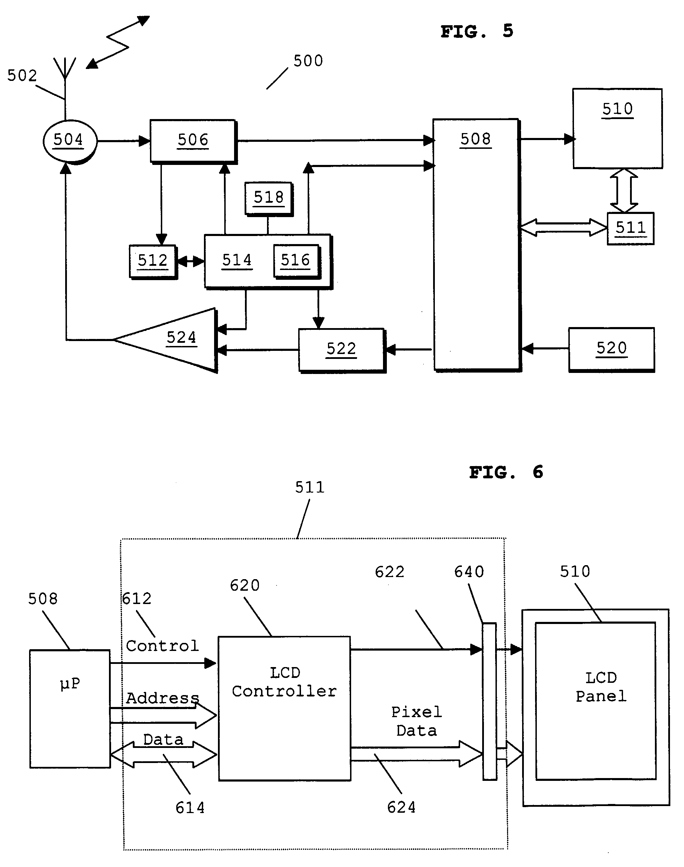

Referring next to FIG. 5, there is shown a block diagram of part of a communication device 500, adapted to support the inventive concepts of the preferred embodiments of the present invention. The communication device 500, in the context of the preferred embodiment of the invention is a mobile phone. As such, the communication device 500 contains an antenna 502 preferably coupled to a duplex filter, antenna switch or circulator 504 that provides isolation between receive and transmit chains within the wireless communication device 500.

The receiver chain, as known in the art, includes scanning receiver front-end circuitry 506 (effectively providing reception, filtering and intermediate or baseband frequency conversion). The scanning front-end circuit is serially coupled to a signal processing function 508. An output from the signal processing function 508 is provided to a suitable output device 510, such as a screen or a flat panel display. The screen or flat panel display 510 preferably includes a display driver 511.

As known in the art, the receiver chain also includes received signal strength indicator (RSSI) circuitry 512, which in turn is coupled to a controller 514 for maintaining overall communication device control. The controller 514 is also coupled to the scanning receiver front-end circuitry 506 and the signal processing function 508 (generally realised by a DSP). The controller 514 may therefore receive bit error rate (BER) or frame error rate (FER) data from recovered information. The controller is also coupled to a memory device 516 that stores operating regimes, such as decoding/encoding functions and the like.

A timer 518 is typically coupled to the controller 514 to control the timing of operations (transmission or reception of time-dependent signals) within the communication device 500.

As regards the transmit chain, this essentially includes an input device 520, such as a keypad, coupled in series through transmitter/modulation circuitry 522 and a power amplifier 524 to the antenna 502. The transmitter/modulation circuitry 522 and the power amplifier 524 are operationally responsive to the controller.

Of course, the various components within the wireless communication device 500 can be realised in discrete or integrated component form. The wireless communication device 500 may, for example, be a cellular phone, a portable or mobile radio, a personal digital assistant, a laptop computer or a wirelessly networked personal computer (PC) that requires access to a communication system.

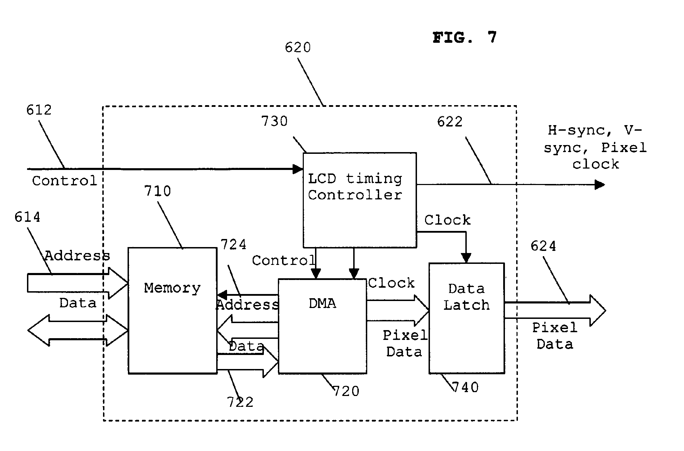

In accordance with the preferred embodiment of the present invention, the output from the signal processing function 508, the display driver 511 and the output device 510, have been adapted to provide the output device, preferably an LCD panel, on an interchangeable cover part of the communication device. In a further preferred embodiment of the present invention, the display driver 511, and/or any illumination mechanism to provide light through the LCD, may also be incorporated into the cover part. As such, the communication link between the signal processing function 508 and the display driver 511 and/or output device 510, has been adapted to enable such communications between a main (or ancillary) PCB and the cover part. In particular, the communication link enables an indication of a display type, size or media that is supported by the display to be provided from the display 510 or display driver 511 back to the signal processing function 508. The adaption is described further with regard to FIG. 6 and FIG. 7.

Referring now to FIG. 6, a block diagram of a preferred LCD driver circuitry 511, for the communication device 500 of FIG. 5, is illustrated. The signal processing function 508 is connected to an LCD controller 620 by way of a control link 612, and address and data buses 614. The LCD controller 620 is also connected to an LCD panel 510 by way of a timing link 622 providing timing signals horizontal (H)-sync, vertical (V)-sync and pixel clock, and a pixel data bus 624. The timing frequency of H-synch and the pixel clock 350 are typically multiples of the V-synch frequency. The V-synch signal may be used to inform the display driver when to commence incorporating the next whole image or text page or commence refreshing portions of the current image or text page. The V-synch signal may therefore be used to control when the vertical alignment of the refresh operation returns to the top of the display. For the illustrated embodiment there is also provided a connector 640 between the LCD controller 620 and the LCD panel 510.

Referring now to FIG. 7, an example of the LCD controller 620 of FIG. 6, is illustrated. The LCD controller 620 includes an area of memory 710 that, in use, stores image data relating to an image to be displayed by the LCD panel 510. The image data is provided by the signal processing function 508 by way of the address bus 614 and data bus 616.

The LCD controller 620 also includes a direct memory access (DMA) function 720 connected to the memory 710. The DMA function 720 retrieves pixel data for the image to be displayed from the memory device 710 via address and data busses 722 and control link 724. The pixel data retrieved from the memory is then passed to a data latch 740. The data latch 740 preferably includes a buffer (not shown) for making the pixel data available to the LCD panel 510.

It is within the contemplation of the invention that a variety of displays may be used, encompassing various technology types, sizes, in order to configure the communication device to display, for example, text strings, text messages, images and/or video.

In accordance with the preferred embodiment of the present invention, an LCD timing controller 730, provided in the LCD controller 620, receives control signals from the signal processing function 508. The control signals inform the LCD timing controller 730 when the image to be displayed is to be changed (i.e. when new image data has been stored in the memory 710 and where in the memory it has been stored). The LCD timing controller 730 provides a control signal to the DMA 720, indicating a location in the memory 710 from where the pixel data is to be retrieved. The location information, in accordance with the preferred embodiment of the present invention, is provided by the control signal received from the signal processing function 508. The LCD timing controller 730 also provides clock signals to the DMA function 720 and data latch 740, in order to coordinate the retrieval and making available of pixel data. Furthermore, the LCD timing controller 730 also provides the timing signals H-sync, V-sync and pixel clock to the LCD panel 510. These timing signals are preferably dependent upon the type and/or size and/or media supported by the LCD panel 510 attached to the front cover part.

It will be appreciated that the LCD driver circuitry 511, illustrated in greater detail in FIG's 6 and 7, is only a preferred LCD driver circuit configuration. A skilled artisan would appreciate that many other suitable LCD driver circuits may alternatively be provided to benefit from the inventive concepts described herein. For example, the memory 710 in which the image data is stored, and from which the pixel data is retrieved, may be provided separate to the LCD controller 620.

It is also within the scope of the invention for a front cover providing no display means to be utilised, for example when the user of the mobile phone is visually impaired and has no need for a display.

Moreover, the exact criterion for determining what is or is not a 'cover part' of a communication device,
according to the aforementioned description, will depend on the exact nature of a particular communication device, and as such cannot be defined simply in an absolute sense for all situations. Nevertheless, it will be appreciated that for any particular communication device,
characteristics of an external attachable part that tend to support the consideration that the external part acts a cover part, include one or any combination of the following:
(i) The external attachable part is required to complete the communication device, at least in the eyes of the end-user;
(ii) When the cover part is attached to a functional module part, the cover part provides substantial physical support and/or protection for at least some of the functional module part;
(iii) When the cover part is attached to the functional module part, the cover part provides substantial physical support and/or protection to substantially all of the functional module part; and
(iv) When the cover part is attached to the functional module part, the cover part surrounds at least a substantial portion of the functional module part.

Referring back to FIG. 6 and FIG. 7, the first and second connection parts 340, 350 of FIG. 3 may make up the connector 640, with the LCD controller 620 being provided on the PCB 326 in the functional module 300.

Alternatively, the first and second connection parts 340, 350 may be located between the signal processing function 508 and the LCD controller 620, with the LCD controller 620 being provided in the front cover part 316.

Preferably, the functional module 300 is capable of determining the type of display provided by the front cover that is connected thereto. This may be achieved by way of an LCD code stored in an area of memory (not shown) in the front cover part 316. The signal processing function 508 is preferably capable of accessing the area of memory in the front cover part 316, for example, when the front cover part 316 is first connected to the functional module 300. Alternatively, each time the mobile phone is turned on the microprocessor accesses the area of memory in the front cover part 316.

On accessing the area of memory in the front cover part 316, the signal processing function 508 retrieves the LCD code, and from this code is able to determine the type of LCD panel 320, 420. The mobile phone may have stored in an area of memory information relating to each type of LCD panel that it is capable of displaying images on. Such information may include the required driver software and size of display.

Alternatively, the LCD code obtained from the area of memory in the front cover part 316 may comprise the information relating to the LCD panel, including the required driver software, size of display etc.

Since the type/size etc of the display can have an affect on the type of features and functionality that the mobile phone is capable of offering to the user, preferably the features and functionality that the mobile phone offers to the user are dependent on the LCD panel provided by the front cover part 316. For example, where the LCD panel is of reduced dimensions, the mobile phone disables the ability to display images, whilst retaining the ability to display text, etc.

In the illustrated embodiments, the mobile phone comprises both front and rear cover parts. It is within the scope of the present invention for the mobile phone to only comprise one cover part, for example the front cover part. Furthermore, the cover parts are illustrated as substantially enclosing the functional module of the mobile phone. However, it is within the scope of the present invention for the one or more cover parts to only cover a part of the function module.

It is also within the contemplation of the invention that many other display technologies, in addition to the preferred LCD arrangement, may benefit from the inventive concepts described herein.

It will be understood that the integrated cover and LCD arrangement described above provides at least the following advantages:
(i) A single functional module can be manufactured without a display.
(ii) The display can be interchanged with other displays by changing cover parts that each include a display.
(iii) The communication device can be adapted in accordance with a variety of displays; for example, the displays may vary in terms of:
   a) Height, width or display area;
   b) Number of pixels and definition;
   c) Display characteristics (e.g. colour, monochrome, greyscale etc.)
(iv) The manufacturing of the communication device, such as a mobile phone, is made simpler.
(v) The functional module can be designed, manufactured and configured independently of the display, since a generic connection is preferably provided.
(vi) A single functional module can be manufactured for a variety of different tier phones, having different size/types of display, with potentially only software variations required.
(vii) An interchangeable cover part has been provided that provides more than mere aesthetic value.

Whilst the specific and preferred implementations of the embodiments of the present invention are described above, it is clear that one skilled in the art could readily apply variations and modifications of such inventive concepts.

Thus, a communication device with display and interchangeable cover parts has been described where the aforementioned disadvantages with prior art arrangements have been substantially alleviated.

## Claims

1. A communication device (300, 500) comprising at least one interchangeable cover part (316) and a display (320, 420), the communication device (300, 500) **characterised in that** the display (320, 420) is integrated into the interchangeable cover part (316).

2. The communication device (300, 500) according to Claim 1, further **characterised by** a functional module comprising a plurality of functional operations of the communication device, wherein the functional module is attachable to the at least one interchangeable cover part (316), such that the display (320, 420) displays signals generated by the functional module.

3. The communication device (300, 500) according to any preceding Claim, further **characterised by** a light guide (330, 430), located on the at least one interchangeable cover part (316) and operably coupled to the display (320, 420).

4. The communication device (300, 500) according to Claim 3, further **characterised by** a light source, located on the at least one interchangeable cover part (316) and operably coupled to the light guide (330, 430) such that the light source emits light through the light guide (330, 430) onto the display (320, 420).

5. The communication device (300, 500) according to Claim 4, further **characterised by** the display (320, 420) being a liquid crystal display such that at least a part of the light emitted by the light source is guided by the light guide behind the liquid crystal display in such a way as to illuminate the liquid crystal display from a side incorporating the light source.

6. The communication device (300, 500) according to any preceding Claim, further **characterised by** a protection element (325), operably coupled to the display (320, 420) on the at least one interchangeable cover part (316), in such a manner as to protect the display (320, 420).

7. The communication device (300, 500) according to any of preceding Claims 2 to 6, further **characterised by** a communication link between the functional module and the at least one interchangeable cover part (316) such that the functional module controls signals to, and preferably provides a power source to, the display (320, 420).

8. The communication device (300, 500) according to Claim 7, further **characterised by** said communication link being a standard interface to enable a plurality of interchangeable covers to be respectively operably attached to said functional module.

9. The communication device (300, 500) according to Claim 7 or Claim 8, further **characterised by** said at least one cover part and said functional module having a mechanical inter-locking mechanism to operably attach said at least one interchangeable cover part (316) to said functional module, such that the inter-locking mechanism also provides the communication link.

10. The communication device (300, 500) according to any of the preceding Claims, further **characterised by** a display driver or display controller operably coupled to said display (320, 420) and located on said interchangeable cover part (316) to control an operation of said display (320, 420).

11. The communication device (300, 500) according to any of preceding Claims 2 to 10, further **characterised by** said display having an indication mechanism, preferably an identification code, to indicate to said functional module a type of display (320, 420) attached to the communication device (300, 500).

12. The communication device (300, 500) according to any of the preceding Claims, further **characterised by** said at least one interchangeable cover part (316) comprising a blanked display.

13. An interchangeable cover part (316) for a communication device **characterised by** a display (320, 420) that is integrated into the interchangeable cover part (316).

14. The interchangeable cover part (316) according to Claim 13, wherein further **characterised by** a light guide (330, 430), located on the at least one interchangeable cover part (316), being operably coupled to the display (320, 420).

15. The interchangeable cover part (316) according to Claim 14, further **characterised by** a light source, located on the at least one interchangeable cover part (316), being operably coupled to the light guide such that the light source emits light through the light guide onto the display (320, 420).

16. The interchangeable cover part (316) according to Claim 15, further **characterised by** the display (320, 420) being a liquid crystal display such that at least a part of the light emitted by the light source is guided by the light guide (330, 430) behind the liquid crystal display in such a way as to illuminate from behind the liquid crystal display.

17. The interchangeable cover part (316) according to any of preceding Claims 13 to 16, further **characterised by** a protection element (325), operably coupled to the display (320, 420) on the at least one interchangeable cover part (316), in such a manner as to protect the display (320, 420).

18. A set of covers, each according to any of Claims 13 to 17, wherein each cover of the set of covers has a different display.

19. A set of covers, each according to any of Claims 13 to 18, wherein each cover of the set of covers has a different light source and/or light source guide.

20. A functional module of a communication device adapted to operably couple to the interchangeable cover part of any of preceding Claims 13 to 17.

21. A functional module adapted for use in the communication device of any of preceding Claims 1 to 12.

22. The communication device (300, 500) according to Claim 1, wherein the communication device (300, 500) is a mobile phone.

23. The interchangeable cover part (316) according to Claim 13, wherein the interchangeable cover part is attachable to a mobile phone.

24. The set of covers according to Claim 18 or Claim 19, wherein the set of covers is a set of mobile phone covers.
